# EUROPÄISCHE PATENTSCHRIFT

(11) **EP 1 272 748 B1**
(45) Veröffentlichungstag und Bekanntmachung des Hinweises auf die Patenterteilung: **06.07.2005**
(21) Anmeldenummer: 00992074.5
(22) Anmeldetag: 19.12.2000
(51) Int. Cl.: F02B 23/10

(54) **HUBKOLBENBRENNKRAFTMASCHINE MIT KRAFTSTOFFDIREKTEINSPRITZUNG ÜBER EINEN EINLASSSEITIG ANGEORDNETEN INJEKTOR**
INTERNAL COMBUSTION PISTON ENGINE WITH DIRECT FUEL INJECTION BY MEANS OF AN INJECTOR THAT IS ARRANGED ON THE INPUT SIDE
MOTEUR A COMBUSTION INTERNE A PISTONS ALTERNATIFS AVEC INJECTION DIRECTE DU CARBURANT PAR UN INJECTEUR PLACE COTE ADMISSION

(30) Priorität: 23.12.1999 DE 19962293
(43) Veröffentlichungstag der Anmeldung: 08.01.2003
(73) Patentinhaber: FEV Motorentechnik GmbH, 52078 Aachen (DE)
(72) Erfinder: GEIGER, José, B-4730 Hauset (BE); BALLAUF, Jörg, 52076 Aachen (DE)
(74) Vertreter: Maxton Langmaack & Partner
(86) Internationale Anmeldenummer: PCT/EP2000/012944
(87) Internationale Veröffentlichungsnummer: WO 2001/049996

(56) Entgegenhaltungen:
- EP-A- 0 875 670
- EP-A- 0 875 672
- EP-A- 1 069 291
- DE-A- 19 741 380
- DE-A- 19 854 923
- DE-A- 19 920 735
- US-A- 5 709 190
- PATENT ABSTRACTS OF JAPAN vol. 2000, no. 09, 13. Oktober 2000 (2000-10-13) & JP 2000 161067 A (NISSAN MOTOR CO LTD), 13. Juni 2000 (2000-06-13) -& DATABASE WPI Section PQ, Week 200039 Derwent Publications Ltd., London, GB; Class Q52, AN 2000-447614 XP002169202 YASUYUKI ITO: "Direct injection type spark ignition engine" & JP 2000 161067 A (NISSAN MOTOR CO LTD), 13. Juni 2000 (2000-06-13)
- PATENT ABSTRACTS OF JAPAN vol. 2000, no. 01, 31. Januar 2000 (2000-01-31) -& JP 11 280478 A (NISSAN MOTOR CO LTD), 12. Oktober 1999 (1999-10-12)
- PATENT ABSTRACTS OF JAPAN vol. 1999, no. 12, 29. Oktober 1999 (1999-10-29) -& JP 11 193722 A (NISSAN MOTOR CO LTD), 21. Juli 1999 (1999-07-21)

## Beschreibung

Bei Hubkolbenbrennkraftmaschinen mit Fremdzündung und direkter Kraftstoffeinspritzung wird der Kraftstoff über einen Injektor direkt in den Arbeitsraum des Motors eingespritzt. Hinsichtlich des Zeitpunktes dieser Einspritzung unterscheidet man grundsätzlich zwei Betriebsarten.

Im sogenannten Homogenbetrieb wird der Kraftstoff früh, im allgemeinen während des Einströmens der Verbrennungsluft, d. h. bei geöffnetem Einlaßventil in den Brennraum eingespritzt. Dadurch wird eine gute Homogenisierung des Kraftstoff-Luft-Gemisches erzielt. Diese Betriebsart bietet sich im Betrieb des Motors bei hoher Last an.

Im sogenannten Schichtladebetrieb erfolgt die Einspritzung erst nach dem Schließen des Gaseinlaßventils, wenn der Kolben in seiner Aufwärtsbewegung in den Bereich seiner oberen Totpunktlage gelangt. Dadurch soll erreicht werden, daß der Kraftstoff nur mit einem Teil der im Zylinder enthaltenen Frischluft und auch nur örtlich begrenzt vermischt wird, bis er durch die Zündeinrichtung entzündet wird. Diese Betriebsart wird vorzugsweise im Teillastbetrieb des Motors und im Leerlauf angewandt. Der Vorteil dabei besteht darin, daß der Motor ohne Drosselung der Ansaugluft betrieben werden kann, ohne daß dabei das Kraftstoff-Luft-Verhältnis in Nähe der Zündeinrichtung für eine sichere Entzündung zu mager ist.

Für diese Betriebsarten sind unterschiedliche Verfahrensweisen zur Einführung des Kraftstoffs in den Zylinderraum und zur Gemischbildung bekannt geworden, die sich in zwei Kategorien unterteilen lassen:
Bei den sogenannten strahl-geführten Verfahren ist der Einspritzstrahl direkt auf die Zündeinrichtung gerichtet. Die eingespritzte Kraftstoffwolke vermischt sich mit der Verbrennungsluft und wird durch die Zündeinrichtung entzündet. Ein zuverlässiger Schichtladebetrieb ist dementsprechend nur gewährleistet, wenn die Zündeinrichtung sehr nahe am Injektor positioniert ist. Damit ist der Nachteil verbunden, daß nur ein extrem kleines, betriebspunkt-spezifisches Zündfenster vorhanden ist und dementsprechend eine Abstimmung der Strahlausbreitung für große Kennfeldbereiche kritisch ist. Die verwendeten Injektoren müssen zudem sehr genau gefertigt werden, wobei schon geringe Toleranzabweichungen oder Veränderungen des Injektors im Langzeitbetrieb zu nachteiligen Randbedingungen für die Entzündung führen.

Die Zündbedingungen im Schichtladebetrieb lassen sich daher nur durch eine exakte geometrische Zuordnung von Zündeinrichtung und Einspritzstrahl sicherstellen. Deshalb sind die bekannt gewordenen Verfahren dieser Kategorie ohne eine ausgeprägte und intensive Ladungsbewegung ausgeführt. Im Homogenbetrieb jedoch fehlt gerade diese Bewegung zur Verbesserung der Homogenisierung des Kraftstoff-Luft-Gemischs, was Leistungseinbußen und eine Erhöhung des Kraftstoffverbrauchs mit entsprechend erhöhtem Schadstoffausstoß zur Folge hat.

Ein weiterer Nachteil dieses Verfahrens ist, daß bedingt durch das direkte Anspritzen der Zündeinrichtung sich ein erhöhter Verschleiß und damit eine Verkürzung der Standzeit der Zündeinrichtungen einstellt.

Die sogenannten wand-geführten Verfahren beruhen darauf, daß im Schichtladebetrieb der Kraftstoffeinspritzstrahl von der durch den Kolbenboden gebildeten Teil der Brennraumwand auf die Zündeinrichtung hin abgelenkt wird. Dabei wirkt eine intensive Ladungsbewegung unterstützend. Durch dieses Verfahren wird das direkte Anspritzen der Zündeinrichtung vermieden. Toleranzabweichungen und der Betriebszustand der Kraftstoffinjektoren sind weniger kritisch als bei den vorstehend erläuterten strahl-geführten Verfahren. Ein Nachteil dieser Verfahren besteht darin, daß der Kraftstoff bei der direkten Einspritzung in den Zylinderraum auf eine Brennraumwand, insbesondere auf den Kolbenboden gelangt, so daß in bestimmten Betriebszuständen eine unvollständige Verbrennung erfolgt, die einen erhöhten Ausstoß an unverbrannten Kohlenwasserstoffen und einen erhöhten Ausstoß von Ruß zur Folge hat. Dieses Verfahren wurde bisher mit einlaßseitigem Kraftstoffinjektor durchgeführt und beruht auf der Ausbildung einer hinsichtlich der Richtung und des Drehsinnes speziellen walzenförmigen Strömung der Zylinderladung in Einspritzrichtung, die den Gemischstrahl über den Kolbenboden führend auf die Zündeinrichtung führt. Diese Form der Ladungsbewegung kann über steil aufrecht stehende Einlaßkanäle erreicht (EP 0 558 072 B1 und DE 197 08 288 A1) werden, was eine entsprechend größere Bauhöhe des Motors bewirkt. Gemäß einem anderen Lösungsvorschlag wird die gewünschte Bewegungsform der Zylinderladung durch eine spezielle Gestaltung des Einlaßkanals oder etwa der Geometrie im Sitzbereich des Einlaßventils (EP 0 463 613 B1) erreicht, was aber nachteilige Auswirkungen auf die Strömungsgüte des Einlaßsystems und damit auf das Vollastbetriebsverfahren des Motors hat. In beiden Fällen ist der Einspritzstrahl auf eine Ausnehmung des Kolbenbodens gerichtet, so daß gerade bei Schichtladebetrieb noch flüssiger Kraftstoff auf den Kolbenboden auftrifft. Da sich dort bildende Gemisch wird dann in Kontakt mit der Wandung des Kolbenbodens gegen die Zündeinrichtung geführt.

Aus EP-A-0 875 672 ist eine Hubkolbenbrennkraftmaschine bekannt, mit gegenüber der Zylinderachse geneigt angeordneten Gaseinlaß- und Gasauslaßkanälen sowie mit einer den Gaseinlaßkanälen zugeordneten Kraftstoffeinspritzeinrichtung. Die den Brennraum begrenzende Zylinderdecke einerseits und der Kolbenboden andererseits sind im wesentlichen dachförmig ausgebildet, wobei im Kolbenboden in der den Gaseinlaßkanälen und der Kraftstoffeinspritzeinrichtung zugekehrten Dachfläche eine im wesentlichen napfförmige Ausnehmung angeordnet ist. Mit Hilfe dieser Anordnung soll erreicht werden, daß bei der sich während des Ansaughubes im Zylinderraum ausbildenden Wirbelströmung mit überlagerter Tumbleströmung mit zunehmender Kompression die Tumbleströmung unterdrückt wird und gegen Ende des Kompressionshubes der Kraftstoff in die Ausnehmung eingespritzt werden kann.

Die im Schichtladebetrieb erforderliche intensive Ladungsbewegung wirkt sich bei diesem Verfahren im Homogenbereich wegen resultierender harter Verbrennungsgeräusche und erhöhter Wandwärmeverluste nachteilig aus.

Aus DE-197 41 380 A1 ist eine Hubkolbenbrennkraftmaschine mit zwei Gaseinlaßkanälen mit Gaseinlaßventil und wenigstens einem Gasauslaßkanal mit Gasauslaßventil und wenigstens einer Zündeinrichtung je Zylinder und mit einem durch die Zylinderdecke und dem Kolbenboden des im Zylinder hin- und herbewegbar geführten Kolbens gebildeten Brennraum bekannt, bei der der Kolbenboden einerseits und die Zylinderdecke andererseits im Vertikalschnitt im wesentlichen dachförmig ausgebildet sind, und jeweils die eine der Dachflächen den Gaseinlaßventilen und die andere der Dachflächen dem Gasauslaßventil zugeordnet sind und die in ihrer Ausrichtung der Ausrichtung der Dachflächen des Kolbenbodens folgen. Im Kolbenboden ist eine muldenförmige Ausnehmung angeordnet, die sich über den Bereich des Dachfirstes auf dem Kolbenboden und damit über die beiden Dachflächen erstreckt. Die Kraftstoffeinspritzdüse mündet nahe dem Eintrittsbereich des Gaseinlaßkanals neben dem Gaseinlaßventils in den Zylinder, die Zündeinrichtung ist in der Zylinderdecke nahe der vertikalen Zylinderachse angeordnet.

Durch die dachförmige Ausgestaltung der Zylinderdecke und auch des Kolbenbodens wird ein Brennraum geschaffen, der nur wenig zerklüftet ist, so daß sich in Verbindung mit der muldenförmigen Ausnehmung auf dem Kolbenboden eine gegen die Kraftstoffeinspritzdüse gerichtete Bewegung der Zylinderfüllung ergibt. Da die Gaseinlaßkanäle unter einem Winkel in den Brennraum einmünden, bildet sich während des Ansaughubes eine Tumble-Strömung aus, die zunächst entlang der Zylinderdecke in den Brennraum einströmt und dann durch die muldenförmige Ausnehmung gegen die Kraftstoffeinspritzdüse zurückgeführt wird. Die Strömung wird auch im Kompressionshub aufrechterhalten.

Insbesondere im Schichtladebetrieb wird über den Kolbenboden Luft gegen die Kraftstoffeinspritzdüse geführt, in die dann der Kraftstoff eingespritzt wird. Damit ergibt sich in unmittelbarer Nähe des Gaseinlaßventils eine verbesserte Gemischaufbereitung, wenn im Schichtladebetrieb die Kraftstoffeinspritzung nach dem Schließen des Auslaßventils zu einem Zeitpunkt erfolgt, zu dem der Kolben in seiner Aufwärtsbewegung sich nahe seiner oberen Totpunktlage befindet. Im Bereich des Einspritzventils ändert die Luftströmung ihre Richtung und wird in Richtung auf die Zündeinrichtung geführt.

Trotz des hierbei reduzierten Brennraumvolumens steht dann für den Kraftstoff ein langer freier Strahlweg mit optimaler Gemischbildung in Richtung der Luftströmung im Zylinder auf die Zündeinrichtung hin zur Verfügung. Hierbei ergibt sich nur ein geringer Auftrag von Kraftstoff auf die Zylinderwandungen. Die besondere Gestaltung des Brennraums in Verbindung mit der Positionierung der Kraftstoffeinspritzdüse erlaubt hierbei eine sehr flache Strahlführung, wobei der aufgefächerte Strahl im Bereich der muldenförmigen Ausnehmung auf dem Kolbenboden einwandfrei und nahezu ohne Benetzung des Kolbenbodens auch bei Schichtladebetrieb in den Brennraum eintreten kann, so daß das Kraftstoff-Luft-Gemisch in einer optimalen Durchmischung an die Zündeinrichtung gelangt.

Der Erfindung liegt nun die Aufgabe zugrunde, an einer Hubkolbenbrennkraftmaschine mit Fremdzündung und mit Direkteinspritzung der vorstehend beschriebenen Art die Zündbedingungen insbesondere im Teillastbereich noch zu verbessern und die Schadstoffemissionen zu vermindern.

Diese Aufgabe wird gemäß der Erfindung gelöst durch eine Hubkolbenbrennkraftmaschine mit den im Anspruch 1 angegebenen Merkmalen.

Weitere Ausgestaltungen und Vorteile der Erfindung lassen sich aus den Unteransprüchen und den nachstehenden Erläuterungen von Ausführungsbeispielen der Erfindung anhand schematischer Zeichnungen entnehmen. Es zeigen:
- Fig. 1: einen Vertikalschnitt durch den Zylinder mit Darstellung der Ladungsbewegung im Ansaughub,
- Fig. 2: einen Vertikalschnitt durch einen Zylinder einer Hubkolbenbrennkraftmaschine mit Einspritzung im Teillastbetrieb,
- Fig. 3: eine Aufsicht auf den Kolbenboden eines Ausführungsbeispiels,
- Fig. 4: einen Querschnitt durch den Kolbenboden gem. der Linie IV-IV in Fig. 3,
- Fig. 5 und 6: in einer Aufsicht und einem Vertikalschnitt gem. der Linie VI-VI in Fig. 5 eine Abwandlung der Ausführungsform gem. Fig. 3 und 4,
- Fig. 7: eine Aufsicht auf den Kolbenboden eines anderen Ausführungsbeispiels,
- Fig. 8: einen Querschnitt durch eine Abwandlung der Ausführungsform gem. Fig. 3 oder Fig. 5,
- Fig. 9: eine schematische Darstellung von unterschiedlichen Ausrichtungen der steilen Wandzone,
- Fig. 10, 11 und 12: eine Abwandlung in Aufsicht und Vertikalschnitten entsprechend den Linien XI-XI und XII-XII in Fig. 10.

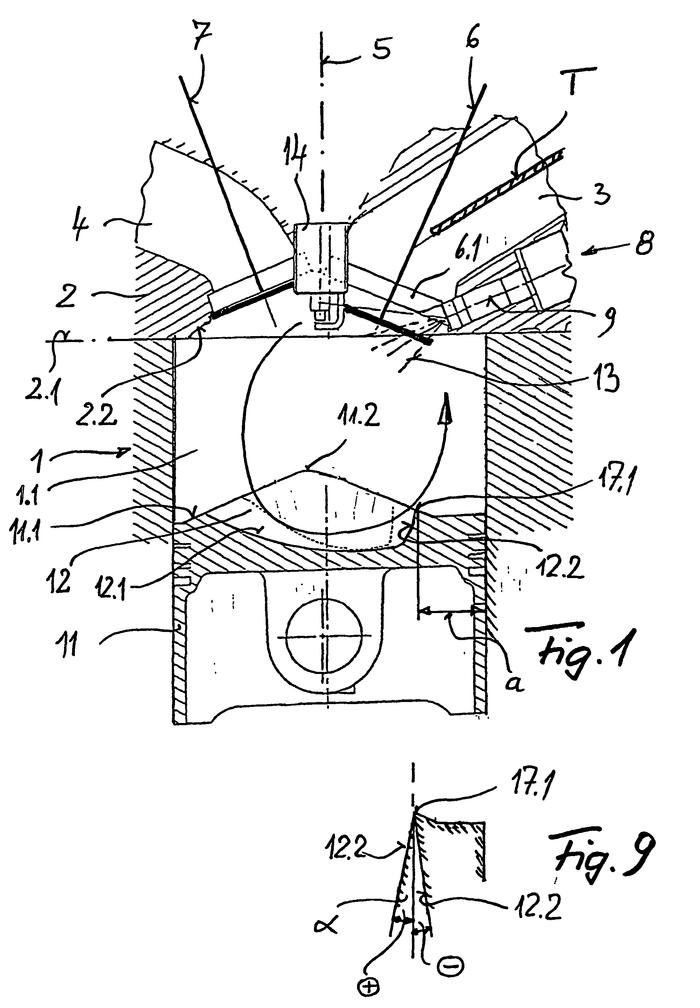

Der in Fig. 1 dargestellte Zylinder 1 einer Hubkolbenbrennkraftmaschine ist mit einem Zylinderkopf 2 versehen, der zwei schräg verlaufende Gaseinlaßkanäle 3 und hierzu in etwa spiegelsymmetrisch umlaufend zwei Gasauslaßkanäle 4 aufweist. Wie aus dem Vertikalschnitt gem. Fig. 1 ersichtlich, sind sowohl die Gaseinlaßkanäle 3 als auch die Gasauslaßkanäle 4 im Zylinderkopf 2 so geführt, daß sie unter einem Winkel von weniger als 45° (gemessen gegenüber der Zylinderkopfebene 2.1) in den Zylinderraum 1.1 einmünden. Die Gaseinlaßkanäle 3 sind durch entsprechende Gaseinlaßventile 6 und die Gasauslaßkanäle 4 sind durch entsprechende Gasauslaßventile 7 jeweils öffen- und schließbar.

Im Zylinderkopf 2 ist im Bereich der Gaseinlaßventile 6 eine Kraftstoffeinspritzdüse 8 angeordnet, die beispielsweise Teil einer Hochdruckkraftstoffdirekteinspritzung in Common-Rail-Technik ist. Bei dem hier dargestellten Ausführungsbeispiel mit zwei Gaseinlaßkanälen 3 ist die Kraftstoffeinspritzdüse 8 zwischen den beiden Gaseinlaßventilen 6 angeordnet. In der Höhe mündet die Kraftstoffeinspritzdüse 8 etwa in der Höhe des unteren Randes des die Einlaßöffnungen jeweils definierenden Ventilsitzringes 6.1 in den Zylinderraum 1.1 ein. Die Strahlachse 9 der Kraftstoffeinspritzdüse 8 ist hierbei gegen die Zylinderachse 5 gerichtet und verläuft ebenfalls unter einem Winkel hierzu, der, gemessen gegenüber der Vertikalen, jedoch größer ist als der Eintrittswinkel der Gaseinlaßkanäle 3., so daß die Strahlachse sehr flach im Zylinderraum verläuft.

Bei dem hier dargestellten Ausführungsbeispiel ist sowohl die Zylinderdecke 2.2 als auch der Kolbenboden 11.1 des Kolbens 11 dachförmig ausgebildet, wobei die entsprechenden Dachflächen jeweils den Gaseinlaßventilen 6 und den Gasauslaßventilen 7 zugeordnet sind. Im Kolbenboden 11.1 ist eine muldenförmige Ausnehmung 12 angeordnet, die der Kraftstoffeinspritzdüse 8 zugeordnet ist und die quer zum "Dachfirst" 11.2 durch beide "Dachflächen" verläuft.

Fig. 1 zeigt die Stellung des Kolbens 11 während des Saughubes. Während der Abwärtsbewegung des Kolbens 11 öffnet das Gaseinlaßventil 6, wobei der Frischluftstrom entlang der auslaßseitigen Dachfläche in den Brennraum einströmt und in Form einer Tumble-Strömung (vgl. Pfeil) zunächst nach unten und dann über den Kolben von unten nach oben in Richtung auf die Kraftstoffeinspritzdüse 8 geführt wird.

Bei einem Homogenbetrieb, d. h. unter hoher Last, wird über die Kraftstoffeinspritzdüse 8 ein aufgefächerter Einspritzstrahl 13 eingespritzt. Nach dem Schließen des Gaseinlaßventils 6 führt die Tumble-Strömung die Zylinderladung (Luft und Kraftstoff) während der Aufwärtsbewegung des Kolbens unter Ausbildung eines homogenen Kraftstoff-Luft-Gemisches, dessen Verbrennung dann über die Zündeinrichtung 14 eingeleitet wird. Bei dieser Betriebsweise ist der Einfluß der muldenförmigen Ausnehmung 12 im Kolbenboden 11.1 von geringerer Bedeutung, da die Gemischbildung hier in erster Linie über die mit dem Gaseinlaßvorgang synchrone Kraftstoffeinspritzung erreicht wird. Deshalb wird in dieser Betriebsart eine abgeschwächte Ladungsbewegung bevorzugt, die einen hinsichtlich der Verbrennungsgeräuschanrequng vorteilhaften Ablauf der Verbrennung zuläßt und im Interesse einer hohen spezifischen Leistung hohe Durchflußwerte des Einlaßsystems ermöglicht.

Durch die Anordnung eines in den Gaseinlaßkanälen 3 angeordneten, steuerbaren Stellorgans (hier nicht dargestellt), läßt sich die Ausbildung der Tumble-Strömung im Zylinderraum 1.1 noch beeinflussen. Je nach der Anordnung und der Stellung des Stellorgans wird eine mehr (bei geschlossenem Stellorgan für Schichtladebetrieb) oder weniger starke (bei geöffnetem Stellorgan für Homogenbetrieb) Tumble-Strömung im Zylinderraum 1.1 erzeugt. Durch die Anordnung einer quer zur Zylinderachse 5 ausgerichteten Trennwand T in wenigstens einem Gaseinlaßkanal 3, die diesen in einen oberen Teilkanal und einen unteren Teilkanal unterteilt, läßt sich die Wirkung des steuerbaren Stellorgens noch verstärken.

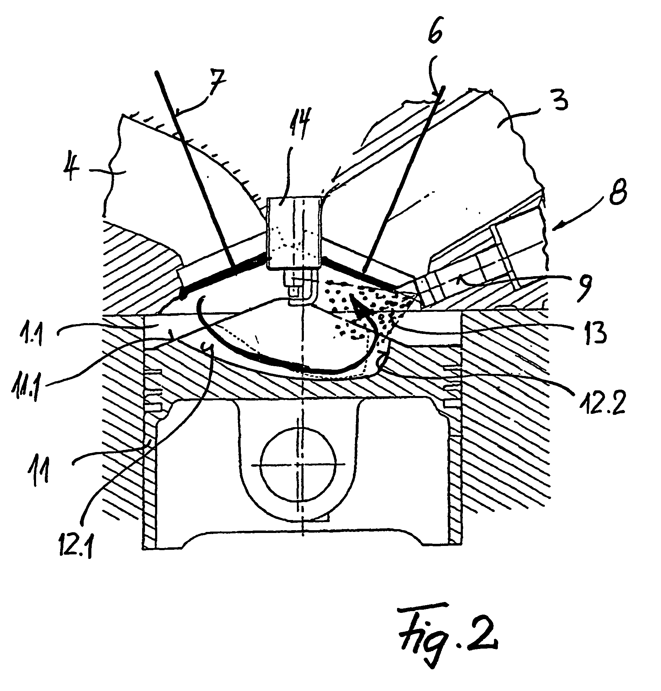

Fig. 2 zeigt für einen sogenannten Schichtladebetrieb, d. h. für einen Betrieb bei Leerlauf bis hin zur Teillast die Stellung des Kolbens 11 im Zylinderraum 1.1 und den Strömungsverlauf zum Einspritzzeitpunkt. Hierbei wird über die Kraftstoffeinspritzdüse 8 der durch eine entsprechende Düsenausbildung aufgefächerter Kraftstoffstrahl 13 bei geschlossenen Gaswechselventilen 6 und 7 in den Zylinderraum eingespritzt. Die in Fig. 1 für den Ansauaghub dargestellte Tumble-Strömung wird nun durch die muldenförmige Ausnehmung 12 im Kolbenboden 11.1 mit ihrem gegen die Gaseinlaßseite abfallend geneigten Muldenboden 12.1 bei der Aufwärtsbewegung des Kolbens 11 gestützt, so daß auch gegen Ende des Kompressionshubes vor der Mündung der Kraftstoffeinspritzdüse 8 eine nach oben gegen die Zylinderdecke gerichtete Komponente der Tumble-Strömung erhalten bleibt, auf die der Kraftstoffstrahl auftrifft. Der Kraftstoffstrahl 13 tritt hierbei im wesentlichen ohne direkte Berührung mit dem Boden der Ausnehmung 12 in den Zylinderraum 1.1 ein und wird somit unter Bildung eines zündfähigen Gemisches mit der im Zylinder vorhandenen Luftfüllung wirbelförmig von der Seite der Gaseinlaßventile 6 gegen die Zündeinrichtung 14 gelenkt und gezündet. Hierbei wird die geordnete Ladungsbewegung in Verbindung mit späten Einspritzzeitpunkten während der Kompression dazu genutzt, Kraftstoff und Luft örtlich begrenzt vorzumischen und als gut zündfähiges Gemisch in die Nähe der Zündeinrichtung zu transportieren. Nach Einleitung der Verbrennung unterstützt die Luft aus den angrenzenden Bereichen der Ladung entsprechend der Ladungsbewegung die Verbrennung.

Wird nun die Ausnehmung 12 im Kolbenboden 11.1 entsprechend der in Fig. 1 im Vertikalschnitt dargestellten Form ausgeführt, so ergibt sich für die vorstehend beschriebene Zündungs- und Verbrennungsphase eine deutliche Verbesserung. Der von der Gasauslaßseite in Richtung auf die Gaseinlaßseite vorzugsweise leicht fallende Muldenboden 12.1 läuft an seiner der Kraftstoffeinspritzdüse 8 zugekehrten Seite in eine steil nach oben gerichtete Wandzone 12.2 aus. Hierdurch wird die Tumble-Strömung, wie durch den Pfeil in Fig. 2 angedeutet, noch vor der Mündung der Kraftstoffeinspritzdüse 8 extrem nach oben gelenkt. Tritt der Kraftstoffstrahl im Schichtladebetrieb in den Brennraum ein, also wenn der Kolben sich dem oberen Totpunkt nähert, dann trifft er auf die zumindest in diesem Bereich nach oben gerichtete Strömungskomponente der verdichteten Luft, wird mit dieser vermischt und in Richtung auf die Zündeinrichtung 14 als zündfähiges Gemisch mitgerissen.

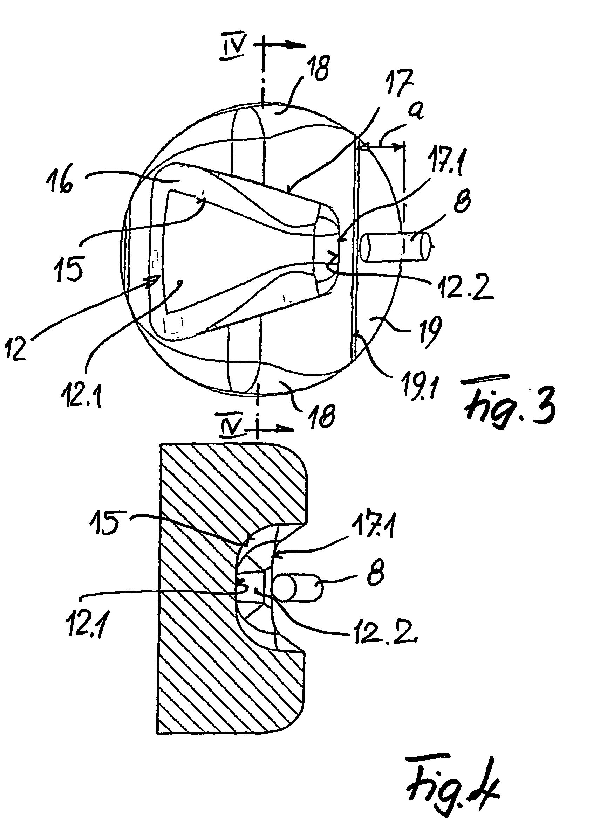

Der vorbeschriebene Effekt kann noch dadurch verbessert werden, wenn die muldenförmige Ausnehmung 12 die in Fig. 3 dargestellte bevorzugte Form aufweist. Hierbei weist der Übergangsbereich 15 zwischen den Seitenwandungen 16 und dem Muldenboden 12.1 in etwa eine Trapezform auf, deren kleine Seite durch die steil nach oben berichtete Wandzone 12.2 gebildet wird.Die Anordnung kann auch so getroffen werden, daß der Verlauf der Kante 17 der muldenförmigen Ausnehmung 12 an der umgebenden Quetschfläche 18 in der Projektion der den Muldenboden 12.1 begrenzenden Trapezkontur in etwa entspricht, wie dies in Fig. 3 dargestellt ist.

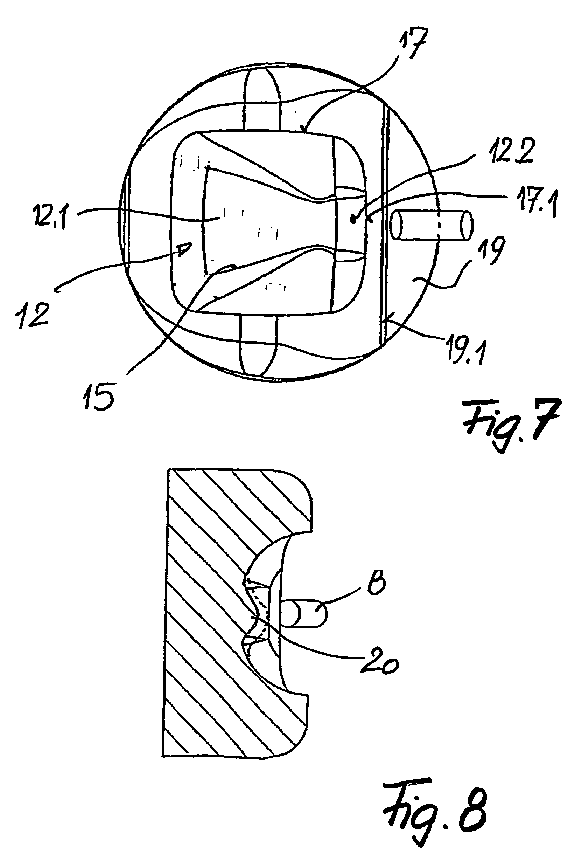

Der Verlauf der Kante 17 kann aber auch bis hin zu einer Rechteckkontur verändert werden, wie dies in Fig. 7 dargestellt ist.

Durch entsprechende Vorgabe der Länge der steilen Wandzone 12.2 in der Trapezkontur des in Richtung auf die Kraftstoffeinspritzdüse 8 ebenfalls geneigt verlaufenden Muldenbodens 12.1 und ihrer oberen Begrenzungskante 17 läßt sich nun die Geschwindigkeit und der "Volumenstrom" der aufwärtsgerichteten Strömungskomponente sowie die Qualität der Vermischung beeinflussen. Die Länge der Wandzone 12.2 im Bereich der Begrenzungskante 17 sollte so bemessen sein, daß eine Teilung des in die aufsteigende Luftströmung eintretenden Kraftstoffstrahls vermieden wird. Hierbei spielen auch Querströmungen aus den Quetschflächen 18 zu beiden Seiten der muldenförmigen Ausnehmung 12, besonders aber auch die schräg nach oben gerichtete Strömung aus der zwischen der Kante 17.1 der Wandzone 12.2 und der Einmündung der Kraftstoffeinspritzdüse 8 angeordneten Quetschfläche 19 eine Rolle, die für eine Verbesserung der Durchwirbelung und damit der Durchmischung der Luft mit Kraftstoff führen. Die Übergangslinie 19.1 zwischen der Quetschfläche 19 und der anschließenden Dachfläche ist zweckmäßigerweise geradlinig und verlauft parallel zur Kante 17.1. Über Veränderung des senkrecht zur Kante 17.1 gemessenen Abstandes a zur gaseinlaßseitigen Zylinderwand läßt sich die Durchmischung von Kraftstoff und Luft optimieren. Der Abstand a sollte - bezogen auf den Zylinderdurchmesser D - gleich oder größer sein als 0,2 D.

Der Muldenboden 12.1 weist, wie Fig. 1 erkennen läßt, einen beispielsweise konkav gekrümmten Verlauf auf. Die Krümmung geht von der Gasauslaßseite her zunächst in die Horizontale über und ist dann - bezogen auf die Zylinderachse 5 - mit einer Abrundung steil nach oben geführt und bildet die steile Wandzone 12.2. Die Neigung der steilen Wandzone 12.2 kann, ausgehend von einer Null-Neigung, d. h. einer zur Zylinderachse 5 parallelen Ausrichtung, zwischen einem positiven Winkel α und einem negativen Winkel α liegen, gemessen gegenüber der Zylinderachse 5, wie dies in der Fig. 1 zugeordneten Darstellung gem. Fig. 9 gezeigt ist.

Als positiver Winkel ist ein Winkel definiert, bei dem die Fläche der Wandzone 12.2 vom Muldenboden 12.1 ausgehend, zumindest im Bereich der Kante 17.1 in Richtung auf die Kraftstoffeinspritzdüse ausgerichtet ist.

Als negativer Winkel ist ein Winkel definiert, bei dem die Fläche der Wandzone 12.2 vom Muldenboden 12.1 ausgehend, entsprechend in Richtung auf die Zündeinrichtung 14 ausgerichtet ist und eine Hinterschneidung bildet.

Während im Homogenbetrieb die Geometrie des Kolbenbodens für den Zünd- und Verbrennungsablauf praktisch ohne Bedeutung ist, wird im Schichtladebetrieb durch die erfindungsgemäße Ausbildung eine deutliche Verbesserung erreicht. Hier ist ein negativer Winkel α wegen seiner deutlichen Umlenkung der durch die Ausnehmung 12 geführten Luftströmung in Richtung auf die Zündeinrichtung von besonderem Vorteil.

Wie der Querschnitt gem. Fig. 4 zeigt, kann die Ausnehmung 12 im wesentlichen trogförmig mit ebenem Muldenboden 12.1 ausgeführt sein. Die Seitenwandungen können hierbei je nach dem Verlauf der oberen Begrenzungskante 17 senkrecht ausgeführt sein, wobei ein senkrechter Verlauf in den an die Wandzone 12.2 angrenzenden Bereichen und ein nach außen geneigter Verlauf bis zu dem der Wandzone 12.2 gegenüberliegenden Bereich für eine gezielte Führung der Luft zweckmäßig ist.

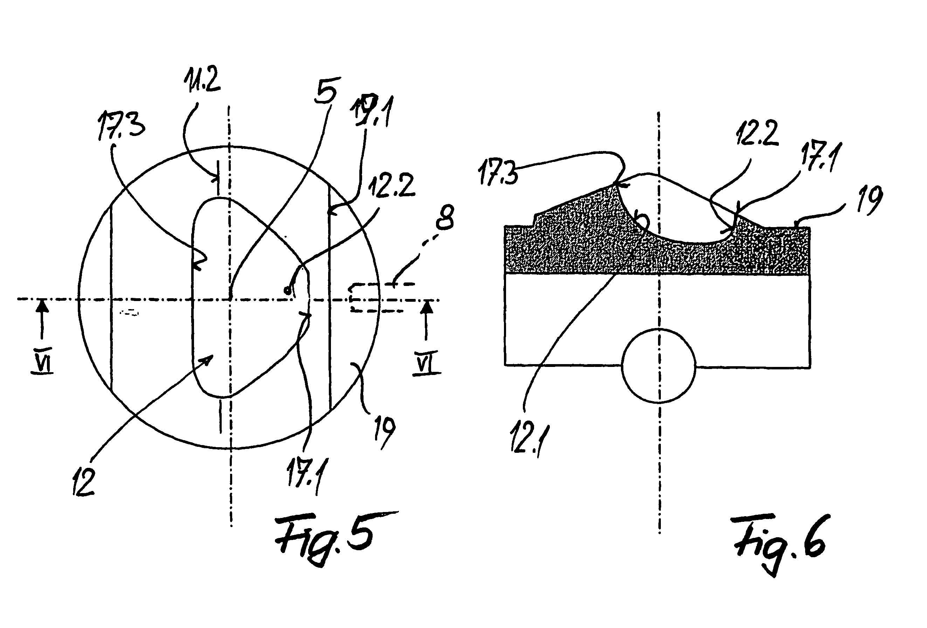

Fig. 5 (Aufsicht) und Fig. 6 (Vertikalschnitt gem. der Linie VI-VI in Fig. 5) zeigen eine Ausführungsform, bei der die gasauslaßseitige Kante 17.3 der muldenförmigen Ausnehmung 12 bis nahe an die Zylinderachse 5 herangeführt ist und in etwa parallel zur Ausrichtung des "Dachfirstes" 11.2 verläuft. Hierdurch ergibt sich im Vergleich zur Ausführungsform gem. Fig. 1 in Verbindung mit Fig. 3 ein etwas stärker geneigter Verlauf der Kontur des Muldenbodens 12.1 in Richtung auf die Gaseinlaßseite, um dann entsprechend der vorbeschriebenen Ausführungsform in eine steile Wandzone 12.2 überzugehen, die gegenüber der Quetschfläche 19 durch die Kante 17.1 begrenzt ist. Auch bei dieser Ausgestaltung ist der Gesamtverlauf der Begrenzungskante 17 in der Projektion in etwa trapezförmig, wobei die "Höhe" des Trapezes gegenüber der Ausführungsform gem. Fig. 3 kleiner ist.

Fig. 7 zeigt eine Abwandlung der Ausführungsform gem. Fig. 3. Hierbei weist ausgehend von einer Trapezkontur des Muldenbodens 12.1 die Begrenzungskante 17 der muldenförmigen Ausnehmung 12 eine in der in Projektion etwa rechteckige Kontur auf.

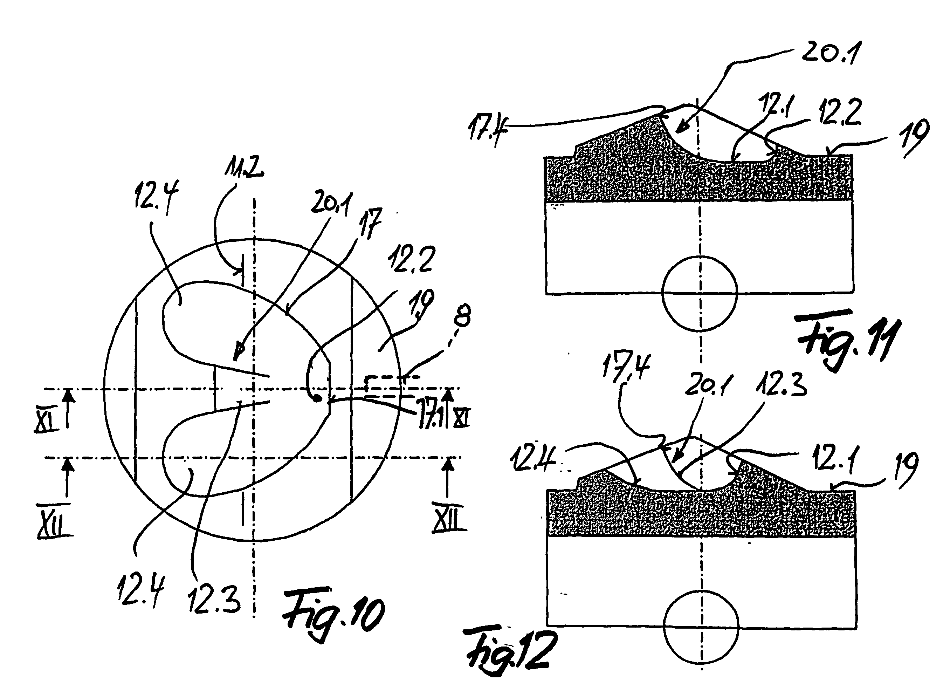

Fig. 8 zeigt im Querschnitt analog zu Fig. 4 eine Abwandlung mit einer sattelförmigen Erhöhung 20 des Kolbenbodens 12.1, die sich von der Gasauslaßseite in Richtung auf die Wandzone 12.2 an der Gaseinlaßseite erstreckt. Hierdurch wird die Strömung in zwei "Strängen" über die Wandzone 12.2 nach oben geführt, so daß auch durch diese Maßnahme ein "Spalten" des Kraftstoffstrahls vermieden wird. Hierbei kann es ausreichen, wenn die sattelförmige Erhöhung nur in einem an die steile Wandzone 12.2 angrenzenden Bereich des Muldenbodens angeordnet ist. Sie kann sich auch bis in die Wandzone 12.2 selbst erstrecken.

Durch die Gestaltung des Kolbenbodens mit der erwähnten muldenförmigen Ausnehmung 12 wird einerseits die beim Ansaugvorgang mit dem speziell gestalteten Gaseinlaßkanal 3 erzeugte Ladungsbewegung unterstützt und bis gegen Ende des sich anschließenden Verdichtungshubes des Kolbens 11 weitgehend erhalten. Darüber hinaus bewirkt die beschriebene Ausnehmung 12 im Zusammenhang mit der Dachform der Zylinderdecke 2.2 die Beschleunigung der walzenförmigen Ladungsbewegung gegen Ende der Verdichtung, wenn das Hauptbrennraumvolumen, bedingt durch die angepaßte Dachform von Zylinderdecke 2.2 und Kolbenboden 11.1 praktisch auf die Mulde 12 komprimiert wird.

Darüber hinaus wird durch eine leichte Neigung dieser muldenförmigen Ausnehmung 12 zum Kraftstoffstrahl 13 hin eine ausreichende freie Strahllänge sichergestellt, was die Benetzung der Brennraumwand mit flüssigem Kraftstoff vermeidet.

In den Fig. 10, 11 und 12 ist in einer Aufsicht (Fig. 10) und in zwei vertikalen Schnitten entsprechend den Linien XI-XI und XII-XII in Fig. 10 eine weitere Abwandlung einer erfindungsgemäßen Ausführungsform dargestellt. Diese Ausführungsform stellt im wesentlichen eine Kombination der Gestaltung der muldenförmigen Ausnehmung 12 entsprechend Fig. 3 und der Gestaltung gem. Fig. 8 dar. Wie aus den Fig. 10, 11 und 12 ersichtlich, ist die sattelförmige Erhöhung 20.1 von der Gasauslaßseite her in Richtung auf die Gaseinlaßseite geführt. Die Anordnung ist hierbei so getroffen, daß die sattelförmige Erhöhung 20.1 zunächst dem Verlauf der gasauslaßseitigen Dachfläche des Kolbenbodens 11.1 folgt und dann mit Abstand vor dem Dachfirst 11.2 zum Muldenboden 2.1 hin abfällt. Damit ergibt sich entsprechend der Aufsicht gem. Fig. 10 ein in etwa "herzförmiger" Verlauf der Begrenzungskante 17, deren Spitze durch die Begrenzungskante 17 der steilen Wandzone 12.2 gebildet wird. Die Anordnung ist zweckmäßigerweise so getroffen, daß der der steilen Wandzone 12.2 gegenüberliegende Flächenbereich 12.3 der sattelförmigen Erhöhung 20.1 als konkave Fläche ausgebildet ist und mit einer verhältnismäßig starken Krümmung in den in etwa horizontalen Bereich des Muldenbodens vor Erreichen der steilen Wandzone 12.1 übergeht. Die beiden, der sattelförmigen Erhöhung 20.1 benachbarten Muldenbereiche 12.4 weisen demgegenüber ein nur verhältnismäßig flach in Richtung auf die steile Wandzone 12.2 ausgebildeten Verlauf auf, wie dies in Fig. 11 dargestellt ist.

Die Ausbildung der muldenförmigen Ausnehmung 12 entsprechend den Fig. 5 und 6 und auch entsprechend den Fig. 10, 11 und 12 hat den Vorteil, daß bei geringer Ladungsbewegungsunterstützung, d. h. bei niedriger Drehzahl der Transport des mit Luft vermischten Einspritzstrahls zur Zündeinrichtung 14 die auslaßseitige, näher an der Kolbenachse 5 liegende Wandzone 12.3 der Kolbenmulde genutzt wird.

Der impulsartig in den Brennraum eintretende Kraftstoffstrahl wird am Wandbereich 12.3 zur Zündeinrichtung 14 hin abgelenkt. Aufgrund der nur geringen Neigung der Strahlachse der Kraftstoffeinspritzdüse 8 und des großen Abstandes zwischen der Mündung der Kraftstoffeinspritzdüse und dem Wandteil 12.3 der Kolbenmulde wird eine Benetzung des Kolbenbodens mit flüssigem Kraftstoff weitgehend vermieden. Eine Begrenzung der freien Ausbreitung des Kraftstoffstrahls durch den sich in Richtung auf den oberen Totpunktes bewegenden Kolbens erfolgt dann erst zu relativ späten Zeitpunkten, so daß entsprechend viel Zeit zur Gemischbildung zur Verfügung steht und praktisch nur verdampfter Kraftstoff auf den in verhältnismäßig kurzem Abstand zur Zylinderachse 5 verlaufenden Wandteil 12.3 auftrifft.

Die Ausführungsform gem. den Fig. 10, 11 und 12 mit einer "herzförmigen" Kontur der Kolbenmulde 12, bei der der Wandteil 12.3 die Begrenzung einer sattelförmigen Erhöhung 20.1 der Kolbenmulde bildet, bietet den Vorteil, daß durch die die sattelförmige Erhöhung 20.1 seitlich begrenzenden Muldenbereiche 12.4, die im Brennraum um eine Querachse zur Zylinderachse 5 verlaufende Tumble-Strömung während des Kompressionshubes bis zum Erreichen einer oberen Kolbenstellung zum Einspritzzeitpunkt gestützt wird. Die Luft wird hierbei aus den beiden seitlichen Muldenbereichen 12.4 in Richtung auf die steile Wandzone 12.2 geführt. Andererseits wird durch die aus dem Bereich der Quetschfläche 19 in den Zylinderinnenraum verdrängte Luft eine Teilung des Einspritzstrahles durch die an der steilen Wandzone 12.2 nach obensteigende Luft vermieden.

## Patentansprüche

1. Hubkolbenbrennkraftmaschine mit wenigstens zwei Gaseinlaßkanälen (3) mit Gaseinlaßventilen (6), wenigstens einem Gasauslaßkanal (4) mit Gasauslaßventil (7) und wenigstens einer Zündeinrichtung (14) je Zylinder (1) sowie mit einem durch die Zylinderdecke (2.1) und dem Kolbenboden (11.1) des im Zylinder (1) hin- und her bewegbar geführten Kolbens (11) gebildeten Brennraum (1.1), in den die Gaseinlaßkanäle unter einem flachen Winkel - gemessen gegenüber der Zylinderkopfebene (2.1) - einmünden, wobei der Kolbenboden (11.1) einerseits und die Zylinderdecke (2.1) andererseits im Vertikalschnitt im wesentlichen dachförmig ausgebildet sind, wobei jeweils die eine der Dachflächen dem Gaseinlaßventil (6) und die andere der Dachflächen dem Gasauslaßventil (7) zugeordnet ist und die Dachflächen der Zylinderdecke (2.1) in ihrer Ausrichtung der Ausrichtung der Dachflächen des Kolbenbodens (11.1) entsprechen, sowie mit einer Kraftstoffeinspritzdüse (8), die nahe dem Eintrittsbereich der Gaseinlaßkanäle (3) zwischen den Gaseinlaßventilen (6) in den Zylinder (1) mündet, wobei, gemessen gegenüber der Zylinderachse (5), der Winkel der Strahlachse (13) der Kraftstoffeinspritzdüse (8) größer ist als der Winkel der Gaseinlaßkanäle, und mit einer Zündeinrichtung (14), die in der Zylinderdecke (2.1) nahe der Zylinderachse (5) angeordnet ist, **dadurch gekennzeichnet, dass** eine im Kolbenboden (11.1) angeordnete, muldenförmige Ausnehmung (12) Seitenwandungen aufweist, die im wesentlichen durch Quetschflächen (18, 19) begrenzt sind und die muldeformige Ausnehmung (12) den Dachfirst (11.2) auf dem Kolbenboden schneidet und die sich über den Bereich beider Dachflächen erstreckt und die einen in Richtung auf den Eintrittsbereich der Gaseinlaßkanäle fallend geneigten Muldenboden (12.1) aufweist, der an seiner der Kraftstoffeinspritzdüse (8) zugekehrten Seite in eine steil nach oben gerichtete Wandzone (12.2) ausläuft.

2. Hubkolbenbrennkraftmaschine nach Anspruch 1, **dadurch gekennzeichnet, daß** der Übergangsbereich (15) zwischen den Seitenwandungen (16) und dem Muldenboden (12.1) in etwa eine Trapezkontur bildet, deren kleine Seite durch die steil nach oben gerichtete Wandzone (12.2) gebildet wird.

3. Hubkolbenbrennkraftmaschine nach Anspruch 2, **dadurch gekennzeichnet, daß** der Verlauf der von der Quetschfläche (18, 19) begrenzten Kante (17) der muldenförmigen Ausnehmung (12) in der Projektion in etwa der den Muldenboden (12.1) begrenzenden Trapezkontur entspricht.

4. Hubkolbenbrennkraftmaschine nach Anspruch 2, **dadurch gekennzeichnet, daß** der Verlauf der von der Quetschfläche (18, 19) begrenzten Kante (17) der muldenförmigen Ausnehmung (12) in der Projektion in etwa einer Rechteckkontur entspricht.

5. Hubkolbenbrennkraftmaschine nach einem der Ansprüche 1 bis 4, **dadurch gekennzeichnet, daß** der Muldenboden (12.1) mit einer sattelförmigen Erhöhung (20; 20.1) versehen ist, die sich von der Gasauslaßseite in Richtung auf die Gaseinlaßseite erstreckt.

6. Hubkolbenbrennkraftmaschine nach einem der Ansprüche 1 bis 5, **dadurch gekennzeichnet, daß** die sattelförmige Erhöhung (20; 20.1) von der Gasauslaßseite her zunächst entsprechend dem Verlauf der Dachfläche des Kolbenbodens (11.1) ansteigt und mit Abstand vor dem Dachfirst (11.2) zum Muldenboden (12.1) hin abfällt.

7. Hubkolbenbrennkraftmaschine nach einem der Ansprüche 1 bis 4, **dadurch gekennzeichnet, daß** die Dachfläche zumindest gaseinlaßseitig in eine ebene Quetschfläche (19) übergeht und daß die Kante (17.1) der steil nach oben gerichteten Wandzone (12.2) der muldenförmigen Ausnehmung (12) mit Abstand zur Übergangslinie (19.1) zwischen ebener Quetschfläche (19) und geneigter Dachfläche in der Dachfläche verläuft.

8. Hubkolbenbrennkraftmaschine nach einem der Ansprüche 1 bis 5, **dadurch gekennzeichnet, daß** die Übergangslinie (19.1) einen geradlinigen Verlauf aufweist.

## Claims

1. Reciprocating internal combustion engine with at least two gas intake ports (3) with gas intake valves (6), at least one gas exhaust port (4) with gas exhaust valve (7) and at least one ignition device (14) for each cylinder (1), and with a combustion chamber (1.1) which is formed by the cylinder cover (2.1) and the piston head (11.1) of the piston (11), which can reciprocate in the cylinder (1), into which chamber the gas intake ports lead at a flat angle - measured with respect to the cylinder head plane (2.1) -, wherein the piston head (11.1) on one side and the cylinder cover (2.1) on the other are substantially roof-shaped in vertical section, wherein one of the roof surfaces is associated with the gas intake valve (6) and the other of the roof surfaces is associated with the gas exhaust valve (7), and the roof surfaces of the cylinder cover (2.1) correspond in their orientation to the orientation of the roof surfaces of the piston head (11.1), and with a fuel injection nozzle (8) which leads into the cylinder (1) near the intake region of the gas intake ports (3) between the gas intake valves (6), wherein, measured with respect to the cylinder axis (5), the angle of the jet axis (13) of the fuel injection nozzle (8) is greater than the angle of the gas intake ports, and with an ignition device (14) which is disposed in the cylinder cover (2.1) near the cylinder axis (5), **characterised in that** a trough-shaped recess (12), which is disposed in the piston head (11.1), comprises side walls which are substantially delimited by squish surfaces (18, 19), and the trough-shaped recess (12) intersects the roof ridge (11.2) on the piston head, extends over the region of both roof surfaces and comprises a trough bottom (12.1) which slopes downward in the direction of the intake region of the gas intake ports and ends at its side which faces the fuel injection nozzle (8) in a wall zone (12.2) which is directed steeply upward.

2. Reciprocating internal combustion engine according to Claim 1, **characterised in that** the transition region (15) between the side walls (16) and the trough bottom (12.1) forms an approximately trapezoidal contour, the short side of which is formed by the wall zone (12.2) directed steeply upward.

3. Reciprocating internal combustion engine according to Claim 2, **characterised in that**, in a projection, the path of the edge (17), delimited by the squish surface (18, 19), of the trough-shaped recess (12) corresponds approximately to the trapezoidal contour which delimits the trough bottom (12.1).

4. Reciprocating internal Combustion engine according to Claim 2, **characterised in that**, in a projection, the path of the edge (17), delimited by the squish surface (18, 19), of the trough-shaped recess (12) corresponds approximately to a rectangular contour.

5. Reciprocating internal combustion engine according to any one of Claims 1 to 4, **characterised in that** the trough bottom (12.1) is provided with a saddle-shaped elevation (20; 20.1) which extends from the gas exhaust side in the direction of the gas intake side.

6. Reciprocating internal combustion engine according to any one of Claims 1 to 5, **characterised in that** the saddle-shaped elevation (20; 20.1) firstly rises from the gas exhaust side according to the path of the roof surface of the piston head (11.1) and slopes down towards the trough bottom (12.1) as the distance from the roof ridge (11.2) increases.

7. Reciprocating internal combustion engine according to any one of Claims 1 to 4, **characterised in that** the roof surface passes at least on the gas intake side into a plane squish surface (19), and that the edge (17.1) of the wall zone (12.2), directed steeply upward, of the trough-shaped recess (12) extends at a distance from the transition line (19.1) between the plane squish surface (19) and the inclined roof surface in the roof surface.

8. Reciprocating internal combustion engine according to any one of Claims 1 to 5, **characterised in that** the transition line (19.1) follows a rectilinear path.

## Revendications

1. Moteur à combustion interne à piston alternatif comprenant au moins deux canaux d'admission de gaz (3) avec des soupapes d'admission de gaz (6), au moins un canal d'échappement de gaz (4) avec soupape d'échappement de gaz (7) et au moins un dispositif d'allumage (14) par cylindre (1), ainsi qu'une chambre de combustion (1.1) formée par la couverture de cylindre (2.1) et le fond de piston (11.1) du piston (11) apte à être guidé dans le cylindre (1) dans un mouvement de va-et-vient, dans laquelle débouchent les canaux d'admission de gaz sous un angle plan - mesuré par rapport au plan de tête de cylindre (2.1) -, dans lequel le fond de piston (11.1) d'une part et la couverture de cylindre (2.1) d'autre part présentent en coupe verticale pour l'essentiel la forme d'un toit, respectivement l'une des surfaces de toit étant associée à la soupape d'admission de gaz (6) et l'autre des surfaces de toit à la soupape d'échappement de gaz (7) et les surfaces de toit de la couverture de cylindre (2.1) correspondent au niveau de leur orientation à celle des surfaces de toit du fond de piston (11.1), et comprenant une buse d'injection de carburant (8) qui débouche dans le cylindre (1) à proximité de la zone d'entrée des canaux d'admission de gaz (3) entre les soupapes d'admission de gaz (6), l'angle de l'axe de jet (13) de la buse d'injection de carburant (8), mesuré par rapport à l'axe de cylindre (5), étant supérieur à l'angle des canaux d'admission de gaz, et comprenant un dispositif d'allumage (14) disposé dans la couverture de cylindre (2.1) à proximité de l'axe de cylindre (5), **caractérisé en ce qu'**un évidement (12) creux disposé dans le fond de piston (11.1) présente des parois latérales qui pour l'essentiel sont délimitées par des surfaces de compression (18, 19), et l'évidement (12) creux coupe l'arête du toit (11.2) sur le fond de piston et s'étend sur la zone des deux surfaces de toit et présente un fond de creux (12.1) incliné en direction de la zone d'entrée des canaux d'admission de gaz, qui sur son côté situé en regard de la buse d'injection de carburant (8) se termine par une zone de paroi (12.2) dressée vers le haut.

2. Moteur à combustion interne à piston alternatif selon le revendication 1, **caractérisé en ce que** la zone de transition (15) entre les parois latérales (16) et le fond de creux (12.1) forme sensiblement un contour de trapèze dont le petit côté est formé par une zone de paroi (12.2) dressée vers le haut.

3. Moteur à combustion interne à piston alternatif selon la revendication 2, **caractérisé en ce que** le tracé de l'arête (17) de l'évidement creux (12) délimitée par la surface de compression (18, 19) correspond en projection sensiblement au contour de trapèze délimitant le fond de creux (12.1).

4. Moteur à combustion interne à piston alternatif selon la revendication 2, **caractérisé en ce que** le tracé de l'arête (17) de l'évidement creux (12) délimitée par la surface de compression (18, 19) correspond en projection sensiblement à un contour rectangulaire.

5. Moteur à combustion interne à piston alternatif selon l'une quelconque des revendications 1 à 4, **caractérisé en ce que** le fond de creux (12.1) est muni d'une élévation (20 ; 20.1) en forme de selle qui s'étend du côté échappement de gaz en direction du côté admission de gaz.

6. Moteur à combustion interne à piston alternatif selon l'une quelconque des revendications 1 à 5, **caractérisé en ce que** l'élévation (20 ; 20.1) en forme de selle monte d'abord depuis le côté échappement de gaz selon le tracé de la surface de toit du fond de piston (11.1) puis descend ensuite à distance devant l'arête de toit (11.2) vers le fond de creux (12.1).

7. Moteur à combustion interne à pistons alternatifs selon l'une quelconque des revendications 1 à 4, **caractérisé en ce que** la surface de toit, du moins côté admission de gaz, est prolongée par une surface de compression (19) plane, et l'arête (17.1) de la zone de paroi (12.2) de l'évidement creux (12) dressée vers le haut s'étend dans la surface de toit à distance de la ligne de transition (19.1) entre la surface de compression (19) plane et la surface de toit inclinée.

8. Moteur à combustion interne à piston alternatif selon l'une quelconque des revendications 1 à 5, **caractérisé en ce que** la ligne de transition (19.1) présente un tracé droit.
